Europäisches Patentamt

European Patent Office

Office européen des brevets

(19)

(11) Veröffentlichungsnummer: **0 079 051**
**B1**

(12) **EUROPÄISCHE PATENTSCHRIFT**

(45) Veröffentlichungstag der Patentschrift:
**23.04.86**

(21) Anmeldenummer: **82110160.7**

(22) Anmeldetag: **04.11.82**

(51) Int. Cl.⁴: **A 22 C 21/00**

(54) **Vorrichtung zum Einbringen von Hähncheninnereien in die Körperhöhle von Hähnchen.**

(30) Priorität: **06.11.81 DE 3144178**

(43) Veröffentlichungstag der Anmeldung:
**18.05.83 Patentblatt 83/20**

(45) Bekanntmachung des Hinweises auf die Patenterteilung:
**23.04.86 Patentblatt 86/17**

(84) Benannte Vertragsstaaten:
**DE FR GB IT NL SE**

(56) Entgegenhaltungen:
**EP - A - 0 002 554
DE - A - 3 015 336
US - A - 3 540 074
US - A - 3 806 988
US - A - 4 251 901
US - A - 4 283 813**

(73) Patentinhaber: **Machinefabriek Markert B.V.,
Voltastraat 1, NL-6710 BD Ede (NL)**

(72) Erfinder: **Markert, Heinrich Willi, Onderlangs 17,
NL-6731 BK Otterlo (NL)**

(74) Vertreter: **Füchsle, Klaus, Dipl.-Ing. et al, Hoffmann.
Eitle & Partner Patentanwälte Arabellastrasse 4,
D-8000 München 81 (DE)**

## Beschreibung

Die Erfindung bezieht sich auf eine Vorrichtung zum Einbringen von vorzugsweise in Beutel verpackten Hähncheninnereien in die ausgenommene Körperhöhle von Hähnchen entsprechend dem Oberbegriff des Patentanspruches 1.

Dieser Stand der Technik ist aus der DE-OS 3 015 336 bekannt. Diese Vorrichtung stellt hinsichtlich der Automatisierung des Einbringens der Hähncheninnereien in die Körperhöhle von Hähnchen eine erhebliche Verbesserung dahingehend dar, dass Arbeitskräfte erheblichen Ausmasses eingespart werden können. Für den betriebssicheren Ablauf der gesamten Vorrichtung sind jedoch noch darüberhinausgehende Massnahmen zu treffen.

Daher liegt der Erfindung die Aufgabe zugrunde, die eingangs genannte Vorrichtung dahingehend zu verbessern, dass ein verbesserter Funktionsablauf der Vorrichtung gewährleistet ist.

Diese Aufgabe wird erfindungsgemäss dadurch gelöst, dass die Stössel unmittelbar von einem wahlweisen steuerbaren Antrieb betätigbar sind, welcher Antrieb nur dann betätigbar ist, wenn ein Sensor die Anwesenheit eines Hähnchens an dem einen Transportmittel festgestellt hat.

Normalerweise werden die Hähnchen nacheinander in einem bestimmten Abstand an einem Fördermittel zu einem Einbringbereich gebracht. Jedoch kommt es häufig vor, dass in der Reihe eines oder mehrere Hähnchen fehlen. Wenn entsprechend dem Stand der Technik dann die Stössel zwangsgesteuert werden, so wird in jedem Fall ein in die Schalen eingelegter Beutel mit Innereien von dem Stössel ausgeschoben und dabei dann nicht in die Körperhöhle eines Hähnchens gestossen, sondern in den Umgebungsbereich der Maschine. Dies führt zu einer erheblichen Verschmutzung der Anlage und zu einem zunehmenden Ausschuss hinsichtlich der Innereien. Wenn aber entsprechend der Erfindung der Stössel gezielt gesteuert wird, und zwar nur dann, wenn tatsächlich noch ein Hähnchen an dem genannten Transportmittel festgestellt worden ist, so unterliegt zwar die Schale der üblichen Bewegung auch dann, wenn kein Hähnchen vorhanden ist. Allerdings erfolgt keine Bewegung des Stössels in die Schale und somit auch kein Ausstossen des Beutels aus der Schale. Diese Schale wird mit dem Beutel wieder entlang dem Umlauffördermittel der Stelle zugeführt, wo von einer Bedienungsperson die Beutel in die Schalen eingegeben werden. Diese Schale muss dann an dieser Stelle nicht mehr bestückt werden.

Am Einbringbereich befindet sich ein Andrückelement, welches zwangsgesteuert von aussen gegen das Hähnchen gedrückt wird, um dieses für das Einführen der Schale und des Beutels mit den Innereien zu stabilisieren. Als Gegendruckfläche dient dabei ein abgebogener Abschnitt der Halterung der Schalen, welcher sich an der dem Andrückelement entgegengesetzten Seite des Hähnchens befindet.

Um das Einführen der sich nach unten verjüngenden Schale in die Körperhöhle und somit das Einführen der Beutel zu erleichtern, wird mit dem Absenken der Schale ein Spreizelement zwischen die Beine des Hähnchens geführt, um den Öffnungsbereich der Körperhöhle zu erweitern.

Weitere vorteilhafte Ausgestaltungen ergeben sich aus den abhängigen Ansprüchen.

Weitere Einzelheiten, Merkmale und Vorteile der Erfindung ergeben sich aus der nachfolgenden Beschreibung des in den beigefügten Zeichnungen rein schematisch dargestellten Ausführungsbeispiels. Es zeigt:

Fig. 1 schematisch eine Längsschnittansicht durch den Karusselbereich der erfindungsgemässen Vorrichtung,

Fig. 2 eine schematische Längsschnittansicht durch den restlichen Teil der erfindungsgemässen Vorrichtung mit dem Umlenkbereich für den die Schalen tragenden Förderer und

Fig. 3 eine schematische Draufsicht auf die auf einer ovalen Endlosbahn geführten Schalen.

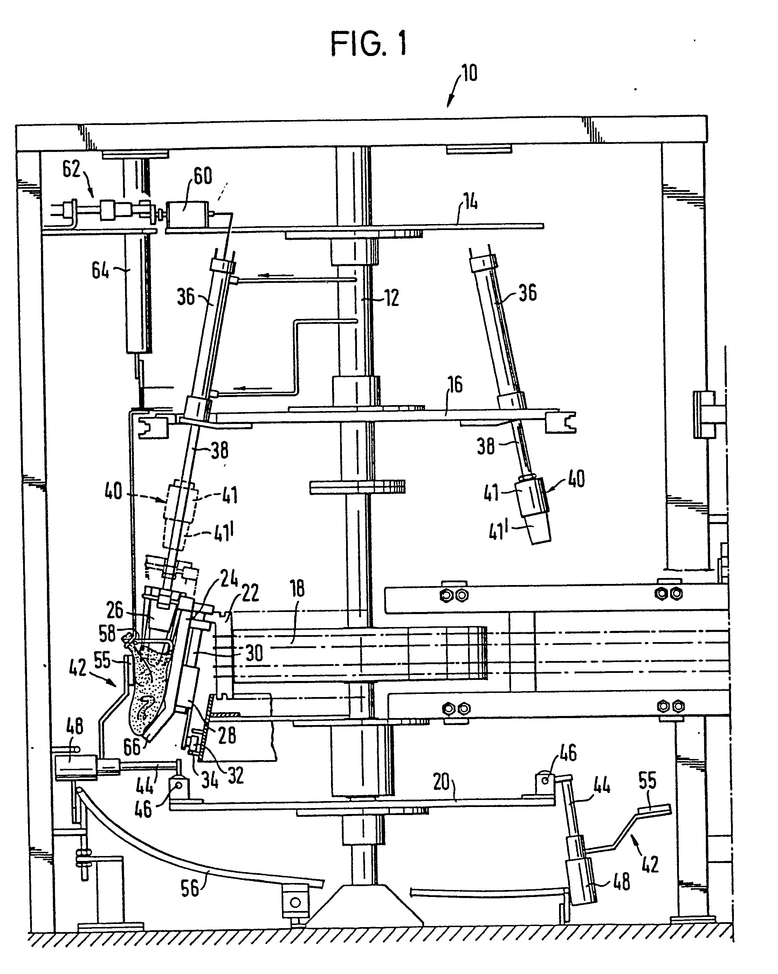

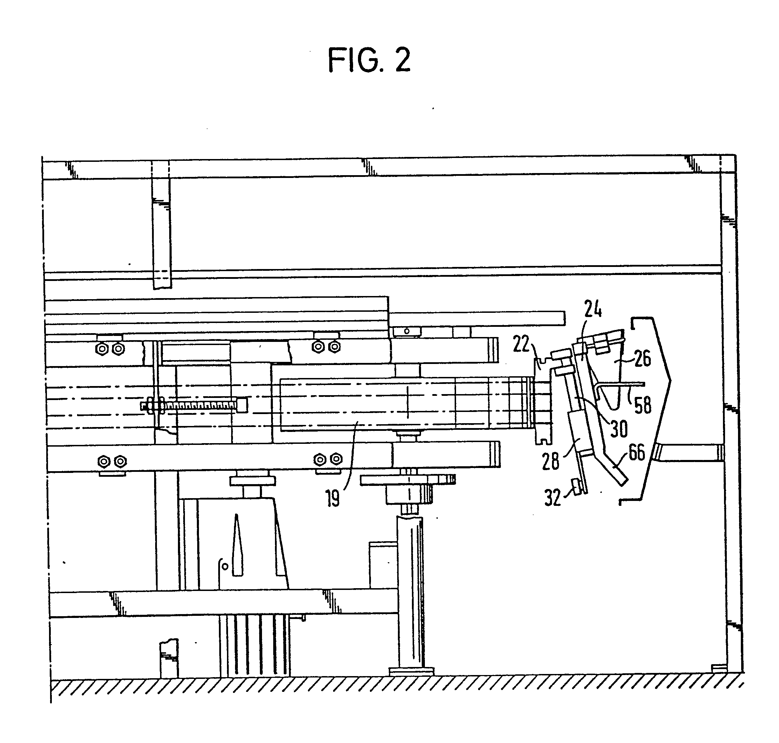

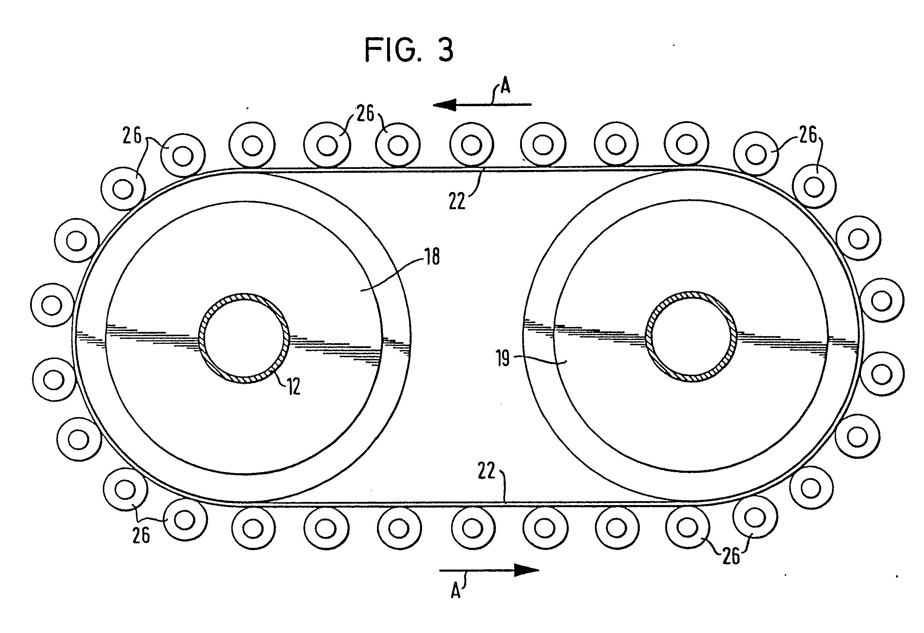

Das in Fig. 1 dargestellte sogenannte Karussel 10 weist eine zentrale Welle 12 auf, von der eine ganze Reihe von Elementen angetrieben werden, die nachfolgend im einzelnen beschrieben sind. Unmittelbar angetrieben werden von dieser Welle von oben nach unten gesehen eine obere Drehscheibe 14, eine mittlere Drehscheibe 16, ein Kettenrad 18 und eine untere Drehscheibe 20. Das Kettenrad 18 bildet den karusselseitigen Umlenkbereich eines Förderers 22, welcher, wie aus Fig. 2 ersichtlich ist, an einer vom Karussel abseits liegenden Stelle um ein weiteres dort gelagertes Kettenrad 19 umgelenkt wird. Zwischen den beiden Kettenrädern nimmt der Förderer 22 einen geradlinigen Verlauf (Fig. 3).

Am Kettenförderer 22 ist eine Halterung 24 befestigt, die an ihrem oberen Ende eine nach unten hin offene und am unteren Ende radial spreizbare Schale 26, welche sich im wesentlichen zur unteren Öffnung hin verjüngt. Am unteren Ende der Halterung 24 ist an der der Schale entgegengesetzten Seite, d.h. in Richtung auf die Welle 12, eine Hülse 28 befestigt, welche auf einer starr am Kettenförderer 22 angebrachten Führungsstange 30 verschiebbar geführt ist. Nach unten hin steht von der Hülse 28 ein Nockenfolgeglied 32 in Form einer sich freidrehenden Rolle, die in einer stationären Nockenbahn 34 geführt ist. Es befinden sich eine ganze Reihe von Halterungen mit Schalen in bestimmten Abständen entlang dem Förderer 22. Im Bereich des Karussels bewegen sich die Schalen und die Halterungen auf einer Kreisbahn, so dass die Schalen 26 zusammen mit den Halterungen 24 im wesentlichen auf einer senkrechten Bahn auf- und abbewegt werden. In Fig. 1 ist in ausgezogenen Linien die untere Stellung und in strichpunktierten Linien die obere Stellung der Halterung und einer Schale dargestellt. An der mittleren Drehscheibe 16 befinden sich über den Umfang verteilt eine ganze Reihe von vorzugsweise pneumatischen Zylindern 36, deren Kolbenstange 38 mit einem Stössel 40 verbunden ist. Mittels des Zylinders 36 ist der Stössel 40 auf- und abbewegbar. Der Stössel ist in Fig. 1 auf der rechten Seite der oberen Lage ausgezogen und auf der linken Seite in der oberen Lage gestrichelt dargestellt. Auf der linken Seite ist die untere Lage des Stössels 40 in ausgezogenen Linien dargestellt, soweit diese Teile nicht durch die Schale abgedeckt sind. Der Zylinder 36 ist zusammen mit der Kolbenstange 38 und dem Stössel 40 so gegenüber der Ebene der mittleren Drehscheibe 16, die senkrecht zur Wellenachse angeordnet ist, im Winkel ausgerichtet, dass zumindest im eigentlichen Einbringbereich der Innereien in die Körperhöhle eines Hähnchens, welcher Einbringbereich auf einer Kreisbahn liegt, die Bewegungsrichtung des Stössels 40 mittig in die zugehörige Schale 26 weist.

Auf der linken Seite der Fig. 1 sind die zuvor beschriebenen Teile in ausgezogenen Linien in der Lage dargestellt, in der die Schale in die Körperhöhle eines nicht dargestellten Hähnchens eingeführt und der die Innereien enthaltende Beutel, welcher zuvor in die Schale gegeben wurde, bereits in die Körperhöhle des Hähnchens eingeschoben ist.

Um das Hähnchen für den Einbringvorgang weitgehend zu stabilisieren, sind an der unteren Drehscheibe 20 eine Reihe von Andrückelementen 42 so angelenkt, dass diese sich um eine zur Ebene der Drehscheibe 20 parallele und tangential verlaufende Achse so verschwenken lassen, dass diese Andrückelemente 42 im Einbringbereich der Innereien in die Körperhöhle des Hähnchens während der Bewegung auf einer Kreisbahn in Richtung auf das Hähnchen drückbar sind. Hierzu weist das Andrückelement 42 eine Kippstange 44 auf, die an dem der genannten Achse 46 entgegengesetzten Ende mit einem als Rolle ausgebildeten Nockenfolgeglied 48 versehen ist. Am Kipphebel 44 befindet sich ein Andrückglied 55, welches auf der linken Seite der Fig. 1 in der an das nicht dargestellte Hähnchen angedrückten Lage dargestellt ist. Das Nockenfolgeglied 48 folgt zur Bewirkung der Schwenkbewegung des Kipphebels 44 einer stationären Nockenbahn 56.

An der Halterung 24 für die Schalen 26 befindet sich an der Seite der Schalen ein Spreizelement 58, welches sich beim Absenken der Schalen zwischen die Beine des Hähnchens setzt und dabei die Beine und die Körperhöhlenöffnung so spreizt, dass ein einwandfreies Einführen der Schalen in die Körperhöhle und somit der die Innereien enthaltenen Beutel möglich ist.

Auf der oberen Drehscheibe 14 befindet sich mindestens ein Steuerventil 60, über welches der jeweilige Zylinder 36 angesteuert wird. Dieses Steuerventil 60 steht mit einer foto-optisch betriebenen Steuereinrichtung 62 in Verbindung, welche das Ventil immer dann betätigt, wenn foto-optisch ein Hähnchen festgestellt wird, welches über einen zusätzlichen Förderer 64 zum Einbringbereich gebracht wird.

Die Funktionsweise der zuvor beschriebenen Vorrichtung ist wie folgt: Die Hähnchen werden an den Beinen hängend durch den Förderer 64 kontinuierlich zum Einbringbereich für die Innereien in das Hähnchen gefördert. Synchron hiermit werden in Beutel eingepackte Innereien mit den erwähnten Schalen 26 in den Einbringbereich gebracht. Das Eingeben der Beutel in die Schalen erfolgt im geraden Abschnitt eines im wesentlichen ovalen Verlaufs des Förderers 22. Im Einbringbereich bewegen sich sowohl die Hähnchen als auch die Schalen und ebenso die Stössel auf einer Kreisbahn. Im Einbringbereich wird das Andrückelement 42, welches sich ebenfalls auf einer Kreisbahn bewegt, an das Hähnchen angedrückt. Infolge der beschriebenen Zwangssteuerung über die Nockenkurve 34 wird eine Schale 26 nach unten bewegt und in die Körperhöhle des durch den Förderer 64 herangebrachten Hähnchens eingeführt. Dabei schiebt sich das Spreizelement 58 zwischen die Beine des Hähnchens und erleichtert das Einführen der Schale 26. Bei diesem Vorgang bildet die Halterung 24 der Schale 26 mit einem in Richtung auf das Andrückelement 42 angebogene Abschnitt 66 eine Gegendruckfläche für das Hähnchen.

Wenn durch den beschriebenen foto-optischen Sensor an der entsprechenden Stelle des Förderers 64 ein Hähnchen festgestellt wurde, so wird demzufolge der Stössel 40 mittels des pneumatischen Zylinders 36 in die zuvor angegebene Richtung bewegt, um den Beutel mit den Innereien in die Körperhöhle des Hähnchens einzuschieben. Dabei spreizt sich das zunächst im wesentlichen geschlossene untere Ende der Schale infolge dessen Flexibilität nach aussen.

Nach diesem Einführvorgang werden dann sukzessive entweder infolge der Zwangssteuerung durch die Nockenkurven oder den besonderen Antrieb der pneumatischen Zylinder die einzelnen Teile in ihre Ausgangslage zurückgebracht. Das Hähnchen wird hinter dem Karusselbereich dann weitertransportiert.

Wenn an einer Stelle des Förderers 64 foto-optisch kein Hähnchen festgestellt wird, so wird auch der Stössel nicht betätigt. Die Schale bewegt sich somit nach unten, ohne dass der Beutel aus der Schale ausgestossen wird. Wenn diese Schale mit dem Innereienbeutel an der Bedienungsperson vorbeiläuft, die die Schalen mit den Innereienbeuteln füllt, so muss diese Schale in der gegebenen Reihe nicht gefüllt werden. Es wird aber auch vermieden, dass ein Beutel aus der Schale ausgeschoben wird, ohne dass dieser in ein Hähnchen fällt. Die genannten Stabilisierungseinrichtungen fördern den automatischen Betrieb der gesamten Anlage.

Der Stössel 40 besteht aus zwei Teilabschnitten 41 und 41', von denen der in Einbringrichtung vordere Abschnitt 41' einen kleineren Durchmesser hat als der hintere Abschnitt 41. Die Durchmesser sind so bemessen, dass beim relativ raschen Nach-unten-Bewegen des Stössels, vorzugsweise mit einer Geschwindigkeit von mindestens 1 m/s, zunächst die stumpfe Stirnseite des Abschnitts mit dem kleineren Durchmesser auf die Innereien trifft. Kurz nach dem Auftreffen dieses Abschnitts auf die Innereien stösst der Abschnitt grösseren Durchmessers gegen die Innenwand des jeweiligen Bechers, welcher bereits in die Körperhöhle des Hähnchens eingeführt worden ist, zusammen mit den Hähnchenwandungen nach aussen, so dass diese Spreizkraft nicht über die Innereien auf den Becher und das Hähnchen übertragen werden muss.

Vorzugsweise sind die Becher 26 und die Stössel 40 zusammen mit der zugehörigen Kolbenstange so im Winkel zur Antriebswelle 12 und den senkrecht nach unten hängenden Hähnchen angeordnet, dass die Innereien in Richtung auf die Innenwand des Rückens des Hähnchens bewegt und im wesentlichen entlang dieser Wand in die Körperhöhle eingebracht werden.

**Patentansprüche**

1. Vorrichtung zum Einbringen von vorzugsweise in Beutel verpackten Hähnchen-Innereien in die ausgenommene Körperhöhle von Hähnchen, mit zwei antriebsmässig und taktmässig aufeinander abgestimmten Transportmitteln, von denen das eine Transportmittel (64) die Hähnchen an den Beinen hängend und das andere Transportmittel (22) unten offene Schalen (26) in einen auf einer Kreisbahn liegenden Einbringbereich überführt, in der mindestens ein auf einer Kreisbahn beweglicher Stössel (38, 40) auf einen im wesentlichen quer zu dieser Kreisbahn liegenden Hubweg bewegbar ist, der durch die im Einbringbereich befindliche Schale (26) hindurch in die Körperhöhle des im Einbringbereich befindlichen Hähnchens verläuft, dadurch gekennzeichnet, dass die Stössel (38, 40) unmittelbar von einem wahlweise steuerbaren Antrieb (36, 60, 62) betätigbar ist, welcher Antrieb nur dann betätigbar ist, wenn ein Sensor die Anwesenheit eines Hähnchens an dem einen Transportmittel (64) festgestellt hat.

2. Vorrichtung nach Anspruch 1, dadurch gekennzeichnet, dass das andere, die Schalen (26) führende Transportmittel (22) auf einer im wesentlichen ovalen Endlosbahn geführt ist.

3. Vorrichtung nach den Ansprüchen 1 und 2, dadurch gekennzeichnet, dass Halterungen (24) für die Schalen (26) am unteren Ende in Richtung auf das Hähnchen abgebogen ausgebildet sind.

4. Vorrichtung nach mindestens einem der Ansprüche 1 bis 3, dadurch gekennzeichnet, dass mindestens ein synchron mit den beiden genannten Transportmitteln (22, 64) und den Stösseln (38, 40) zwangsweise von einer stationären Kurve (56) angetriebener, von aussen an das im Einbringbereich befindliche Hähnchen anlegbarer Andrücker (42) vorgesehen ist.

5. Vorrichtung nach mindestens einem der Ansprüche 1 bis 4, dadurch gekennzeichnet, dass die Schalen (26) in zeitlicher Abstimmung mit der Bewegung der Hähnchen und der Stössel (38, 40) bei der Bewegung auf einer Kreisbahn, von einer stationären Nockenkurve angetrieben, in die Körperhöhle des jeweiligen Hähnchens einsteckbar sind.

6. Vorrichtung nach mindestens einem der Ansprüche 1 bis 5, dadurch gekennzeichnet, dass die Schalen (26) am unteren offenen Ende radial dehnbar ausgestaltet sind.

7. Vorrichtung nach mindestens einem der Ansprüche 1 bis 6, dadurch gekennzeichnet, dass ein Spreizelement (58) vorgesehen ist, welches zwangsweise angetrieben und synchron mit der Bewegung der genannten Transportmittel und den Stösseln im Einbringbereich zwischen die Beine des dort befindlichen Hähnchens bewegbar ist.

8. Vorrichtung nach Anspruch 7, dadurch gekennzeichnet, dass das Spreizelement (58) an der in Richtung auf die Körperhöhle des Hähnchens zu und von dieser weg bewegbaren Halterung (24) für die Schalen (26) starr befestigt ist.

9. Vorrichtung nach Anspruch 1, dadurch gekennzeichnet, dass der Antrieb (36) der Stössel ein pneumatischer Antrieb ist, der über eine zentrale Antriebswelle (12) für die Stössel und die übrigen sich auf einer Kreisbahn beweglichen Teile pneumatisch versorgbar ist.

10. Vorrichtung nach mindestens einem der Ansprüche 1 bis 9, dadurch gekennzeichnet, dass der Stössel (40) einen solchen Durchmesser hat, dass dieser zumindest kurz nach dem Auftreffen auf die Innereien an die Innenwand des jeweiligen Bechers (26) anstösst, um diese nach aussen zu spreizen.

11. Vorrichtung nach Anspruch 10, dadurch gekennzeichnet, dass der Stössel (40) aus mindestens zwei Abschnitten unterschiedlichen Durchmessers besteht, wobei der in Einbringrichtung vordere Abschnitt (41) einen kleineren und der hintere Abschnitt (41') einen grösseren Durchmesser hat.

12. Vorrichtung nach mindestens einem der Ansprüche 1 bis 11, dadurch gekennzeichnet, dass der Stössel (40) mit einer Geschwindigkeit von mindestens 1 m/s in Richtung auf die Körperhöhle des Hähnchens bewegbar ist.

13. Vorrichtung nach mindestens einem der Ansprüche 1 bis 12, dadurch gekennzeichnet, dass die Becher (26) und die Stössel (40) in einem Winkel zu den senkrecht nach unten hängenden Hähnchen ausgerichtet sind, so dass die Innereien in Richtung auf die hintere Innenwandung der Körperhöhle des Hähnchens einbringbar sind.

**Claims**

1. Apparatus for the introduction of poultry giblets, which are preferably packed in bags, into the evacuated body cavities of poultry, comprising two conveying means adjusted to each other as to drive and timing, of which the one conveying means (64) transfers the poultry suspended from the legs, and the other conveying means transfers cups (26) opening downwardly along a circular path through an insertion region in which at least one plunger (38, 40) movable along this circular path is movable on a strokepath which lies essentially transversely of this circular path, said strokepath extends through the cup (26) located in the insertion region into the body cavity of the poultry located in said insertion region, characterized in that the plunger (38, 40) is operable directly by means of a selectively controllable drive (36, 60, 62), which is operable only when a sensor has established that poultry is present on the one conveying means (64).

2. Apparatus according to claim 1, characterized in that the other conveying means (22) which guides the cups (26) is guided on a substantially endless oval track.

3. Apparatus according to claims 1 and 2, characterized in that holders (24) for the cups (26) are provided at the lower end and bent in the direction of the poultry.

4. Apparatus according to at least one of the claims 1 to 3, characterized in that at least one pressure element (42) is provided which is synchronized with the two said conveying means (22, 64) and with the plungers (38, 40) and is driven compulsorily by a stationary cam (56) and can be pressed from outside against the poultry located in the insertion region.

5. Apparatus according to at least one of the claims 1 to 4, characterized in that the cups (26) can be inserted in the body cavities of the respective poultry coordinated as to timing with the movement of the poultry and of the plunger (38, 40) during motion on said path and driven by a stationary cam track.

6. Apparatus according to at least one of the claims 1 to 5, characterized in that the cups (26) are such as to be radially extensible at their lower open ends.

7. Apparatus according to at least one of the claims 1 to 6, characterized in that a spreader element (58) is provided, driven compulsorily and synchronized with the movement of the said conveying means and with the plunger in the insertion region is movable between the legs of the poultry located there.

8. Apparatus according to claim 7, characterized in that the spreader element (58) is rigidly fixed on a holder (24) for the cups (26), said holder being movable in the direction of the body cavity of the poultry to and from it.

9. Apparatus according to claim 1, characterized in that the drive (36) of the plunger is a pneumatic drive, which can be pneumatically supplied via a central drive shaft (12) for the plungers and the other parts moving in said circular path.

10. Apparatus according to at least one of the claims 1 to 9, characterized in that the plunger (40) has a diameter such that at least shortly after the impact on the giblets it impacts the inner wall of the respective cup (26), in order to spread the latter outwards.

11. Apparatus according to claim 10, characterized in that the plunger (40) comprises at least two sections of differing diameter, whereby the front section in the direction of insertion (41) has a smaller and the rear section (41') has a greater diameter.

12. Apparatus according to at least one of the claims 1 to 11, characterized in that the plunger (40) can be moved at a speed of at least 1 m/s in the direction of the body cavity of the poultry.

13. Apparatus according to at least one of the claims 1 to 12, characterized in that the cup (26) and the plunger (40) are aligned at an angle to the vertically suspended poultry, so that the giblets can be inserted in the direction of the rear inner wall of the body cavity of the poultry.

**Revendications**

1. Dispositif pour l'introduction d'abats de poulets, emballés de préférence dans un sachet, dans la cavité corporelle de poulets vidés, comportant deux moyens de transport synchronisés réciproquement sur le plan de leur entraînement et de leurs cadences, moyens dont un (64) transfère les poulets suspendus par les pattes et dont le second (22) transfère des bols (26) ouverts du côté inférieur dans une zone d'introduction qui est située sur une trajectoire en circuit fermé, et dans laquelle au moins un poussoir (38, 40) mobile sur une trajectoire en circuit fermé est déployable suivant une course sensiblement transversale par rapport audit circuit fermé et s'étendant à travers le bol (36) placé dans la zone d'introduction jusqu'à l'intérieur de la cavité corporelle du poulet se trouvant dans la zone d'introduction, caractérisé par le fait que les poussoirs (38, 40) peuvent être actionné directement par un système d'entraînement (36, 60, 62) qui peut être commandé à volonté, et qui ne peut être actionné que si un capteur a constaté la présence d'un poulet sur ledit premier moyen de transport (64).

2. Dispositif selon la revendication 1, caractérisé par le fait que le second moyen de transport (22) conduisant les bols (26) est mené sur un circuit sans fin de forme sensiblement ovale.

3. Dispositif selon les revendications 1 et 2, caractérisé par le fait que des supports (24) destinés aux bols (26) présentent une forme recourbée en direction du poulet à leur extrémité inférieure.

4. Dispositif selon au moins l'une des revendications 1 à 3, caractérisé par le fait qu'il est prévu au moins un presseur (42) pouvant être appliqué de l'extérieur sur le poulet se trouvant dans la zone d'introduction, presseur entraîné de façon forcée par une came fixe (56) de manière synchrone avec les deux moyens de transport cités (22, 64) et les poussoirs (38, 40).

5. Dispositif selon au moins l'une des revendications 1 à 4, caractérisé par le fait que les bols (26) peuvent introduits dans la cavité corporelle des poulets d'une came fixe lors du mouvement en circuit fermé, ce mouvement étant synchronisé avec celui des poulets et des poussoirs (38, 40).

6. Dispositif selon au moins l'une des revendications 1 à 5, caractérisé par le fait que les bols (26) sont conformés de manière à pouvoir être dilatés radialement à leur extrémité inférieure ouverte.

7. Dispositif selon au moins l'une des revendications 1 à 6, caractérisé par le fait qu'il est prévu un élément d'écartement (58) qui est entraîné de façon forcée et déplaçable en synchronisme avec le mouvement desdits moyens de transport et des poussoirs, dans la zone d'introduction, entre les pattes du poulet se trouvant dans cette zone.

8. Dispositif selon la revendication 7, caractérisé par le fait que l'élément d'écartement (58) est fixé de manière rigide sur le support (24) pour les bols (26), support qui est mobile suivant un mouvement d'aller vers la cavité corporelle du poulet et de retour à partir de cette cavité.

9. Dispositif selon la revendication 1, caractérisé par le fait que le système d'entraînement (36) des poussoirs est un système d'entraînement pneumatique qui est alimenté en énergie pneumatique par l'intermédiaire d'un arbre d'entraînement central (12) pour les poussoirs et les autres parties mobiles sur un circuit fermé.

10. Dispositif selon au moins l'une des revendications 1 à 9, caractérisé par le fait que le poussoir (40) présente un diamètre tel qu'il vient, au moins peu de temps après son entrée en contact avec les abats, heurter la paroi interne du bol respectif (26) afin d'écarter celle-ci vers l'extérieur.

11. Dispositif selon la revendication 10, caractérisé par le fait que le poussoir (40) est constitué d'au moins deux sections de diamètres différents, la section antérieure (41) dans le sens de l'introduction ayant un diamètre plus petit et la section postérieure (41') ayant un diamètre plus grand.

12. Dispositif selon au moins l'une des revendications 1 à 11, caractérisé par le fait que le poussoir (40) est mobile à une vitesse d'au moins 1 m/s en direction de la cavité intracorporelle du poulet.

13. Dispositif selon au moins l'une des revendications 1 à 12, caractérisé par le fait que les bols (26) et les poussoirs (40) sont disposés inclinés par rapport aux poulets suspendus verticalement vers le bas de manière telle que les abats puissent être introduits en direction de la paroi interne arrière de la cavité corporelle du poulet.

# FIG. 1

# FIG. 2

# FIG. 3

0 079 051